# EUROPÄISCHE PATENTANMELDUNG

(11) **EP 0 949 442 A2**
(43) Veröffentlichungstag der Anmeldung: **13.10.1999**
(21) Anmeldenummer: 99106579.8
(22) Anmeldetag: 31.03.1999
(51) Int. Cl.: F16L 37/084

(54) **Steckverbindung zweier Fluidleitungen**

(30) Priorität: 09.04.1998 DE 19816010
(71) Anmelder: Rasmussen GmbH, D-63477 Maintal (DE)
(72) Erfinder: Bahner, Frank, 63071 Offenbach (DE); Bockenheimer, Alexander, 61130 Nidderau (DE); Pescheck, Carsten, 63584 Gründau (DE)
(74) Vertreter: Knoblauch, Andreas, Dr.-Ing.

(57) **Zusammenfassung**

Bei einer Steckverbindung zweier Fluidleitungen (1, 2) hat die erste Fluidleitung (1) eine erste Halterippe (7) und die zweite Fluidleitung (2) eine zweite Halterippe (8). Ferner hat die Hülse (3) innen einstückig mit ihr ausgebildete, elastisch biegsame erste Haltearme (9), die sich in axialer Richtung erstrecken und in eine erste Ringnut (10) der zweiten Fluidleitung (2) einrastbar sind. Mit der Hülse (3) sind elastisch biegsame Halter verbunden, die bei Einführung der ersten Fluidleitung (1) in die Hülse (3) über die erste Halterippe (7) hinweggleiten und hinter der ersten Halterippe (7) einrasten. In wenigstens einer zweiten Ringnut (6) der zweiten Fluidleitung (2) zwischen dem in die erste Fluidleitung (1) einzuführenden freien Ende der zweiten Fluidleitung (2) und der zweiten Halterippe (8) ist eine Dichtungseinrichtung (5) angeordnet. Um eine einfache Herstellung und Montage der Steckverbindung zu ermöglichen, sind die Halter als einstückig mit der Innenseite der Hülse (3) verbundene, schräg nach innen ragende Haltearme (11) und die erste Ringnut (10) zwischen der zweiten Halterippe (8) und der zweiten Ringnut (6) ausgebildet.

## Beschreibung

Die Erfindung betrifft eine Steckverbindung zweier Fluidleitungen, von denen die erste Fluidleitung eine erste Halterippe und die Zweite Fluidleitung eine zweite Halterippe aufweist, mit einer Hülse, innerhalb der sich einstückig mit der Hülse ausgebildete, elastisch biegsame erste Haltearme in axialer Richtung erstrecken und in eine erste Ringnut der zweiten Fluidleitung einrastbar sind, mit elastisch biegsamen, mit der Hülse verbundenen Haltern, die bei Einführung der ersten Fluidleitung in die Hülse über die erste Halterippe hinweggleiten und hinter der ersten Halterippe einrasten, und mit einer Dichtungseinrichtung, die in wenigstens einer zweiten Ringnut der zweiten Fluidleitung zwischen dem in die erste Fluidleitung einzuführenden freien Ende der zweiten Fluidleitung und der zweiten Halterippe angeordnet ist.

Bei einer bekannten Steckverbindung dieser Art (DE 197 040 969 C1) ist die erwähnte Hülse von einer weiteren Hülse umgeben. Zwischen beiden Hülsen ist eine Rasteinrichtung mit zwei sich diametral gegenüberliegenden elastischen Haltern angeordnet, die jeweils eine am freien Halterende ausgebildete Klaue zum Hintergreifen der ersten Halterippe bei der Einführung der ersten Fluidleitung in die Rasteinrichtung aufweisen. Die Klauen ragen durch Durchbrüche der inneren Hülse. Die einander in Axialrichtung zugekehrten Ränder der Durchbrüche sind unter gleichen Winkeln zur Axialrichtung abgeschrägt wie radial äußere Schrägflächen der Klauen. Die Kalter sind etwa C-förmige, in Umfangsrichtung der ersten Hülse gewölbte Ringe, deren Enden jeweils mit einem von zwei benachbarten, die innere Hülse teilweise umgebenden Ringteilen verbunden sind. Die Kalter sind nach Art einer Ω-Feder elastisch.

Die Hülsen und die Rasteinrichtung bestehen aus Kunststoff. Wegen der komplizierten Form der Rasteinrichtung und der inneren Hülse sind zur Herstellung dieser beiden Teile aufwendige Formwerkzeuge erforderlich.

Ferner befindet sich die erste Ringnut der zweiten Fluidleitung auf der dem freien, in die erste Fluidleitung einzuführenden Ende abgekehrten Seite der zweiten Halterippe. Die innere Hülse muß daher bei der Montage von demjenigen Ende der zweiten Fluidleitung her auf diese Fluidleitung aufgeschoben werden, das auf der dem in die erste Fluidleitung eingeführten Ende der zweiten Fluidleitung abgekehrten Seite der zweiten Halterippe liegt. Ein Aufschieben der Hülse von dieser Seite her ist in vielen Fällen nicht möglich, zum Beispiel dann, wenn die zweite Fluidleitung in etwa rechten Winkeln abgewinkelt ist oder einen Anschlußstutzen an einem Behälter oder dergleichen bildet.

Der Erfindung liegt die Aufgabe zugrunde, eine Verbindung der eingangs genannten Art anzugeben, die eine einfachere Herstellung und Montage ermöglicht.

Erfindungsgemäß ist diese Aufgabe dadurch gelöst, daß die Halter als einstückig mit der Innenseite der Hülse verbundene, schräg nach innen ragende zweite Haltearme ausgebildet sind und die erste Ringnut zwischen der zweiten Halterippe und der zweiten Ringnut ausgebildet ist.

Bei dieser Lösung sind die Hülse und die Halter einstückig ausgebildet. Sie brauchen daher nicht getrennt montiert zu werden. Die Hülse kann vor dem Aufschieben der ersten Fluidleitung auf das Ende der zweiten Fluidleitung über dieses Ende hinweg bis gegen die zweite Halterippe auf die zweite Fluidleitung aufgeschoben werden, und zwar unabhängig davon, ob es sich bei der zweiten Fluidleitung um ein mehrfach abgewinkeltes Rohr oder um einen Anschlußstutzen an einem Gerät handelt.

Vorzugsweise ist dafür gesorgt, daß die Hülse an ihrem im verbundenen Zustand an der zweiten Halterippe anliegenden Ende eine radial nach innen verlaufende, einstückig mit der Hülse ausgebildete Stirnwand aufweist, mit der eine sich axial ins Innere der Hülse in einem radialen Abstand von der Innenseite der Hülse erstreckende zylindrische Wand einstückig verbunden ist, die mit zumindest einem Teil ihrer Länge die ersten Haltearme in einem radialen Abstand axial überdeckt. Die innere zylindrische Wand schützt hierbei die ersten Haltearme weitgehend vor Verschmutzung.

Wenn die Hülse aus Kunststoff besteht, sollte die Stirnwand mit den zweiten Haltearmen fluchtende Durchbrüche aufweisen. Durch diese Durchbrüche können bei der Herstellung der Hülse Kernteile des Formwerkzeugs, die der Formung der radial äußeren Seite der zweiten Haltearme dienen, nach dem Aushärten des Kunststoffs herausgezogen werden.

Hierbei ist es günstig, wenn sich zwischen der Hülse und der sich in diese erstreckenden zylindrischen Wand von einem Ring axial abstehende Beine erstrecken, deren freie Enden gegen Federkraft durch einen gegen den Ring drückenden Teil der in die Hülse eingeführten ersten Fluidleitung in die Durchbrüche gedrückt werden. Diese Beine können die Durchbrüche gegen das Eindringen von Schmutz weitgehend verschließen. Ferner kann anhand der Lage der freien Enden der Beine visuell leicht überprüft werden, ob die erste Fluidleitung beim Einkuppeln richtig in die Hülse eingeführt worden ist.

Beim Einführen der ersten Fluidleitung in die Hülse drückt ferner das freie Ende der ersten Fluidleitung gegen das ihr zugekehrte Ende der inneren zylindrischen Wand. Sollte die Hülse daher beim Aufschieben auf die zweite Fluidleitung noch nicht ihre endgültige Einbaulage erreicht haben, in der die ersten Haltearme in die erste Ringnut eingerastet sind und die Hülse an der zweiten Halterippe anliegt, dann würde die Hülse durch das Aufschieben der ersten Fluidleitung auf den freien Endabschnitt der zweiten Fluidleitung in ihre endgültige Lage gedrückt.

Die Federkraft kann dadurch bewirkt werden, daß an wenigstens zwei Beinen des Rings, die sich gegenüberliegen, zwei Federarme seitlich abstehen, die sich unter elastischer Verbiegung beim Einführen der ersten Fluidleitung in die Hülse und gegen den Ring an der Innenseite der Stirnwand anlegen.

Die zweiten Haltearme können einstückig mit dem der zweiten Halterippe abgekehrten Ende der Hülse verbunden sein. Dies erleichtert zum einen das Einführen der ersten Fluidleitung in die Hülse und ergibt zum anderen eine materialsparende geringe axiale Länge der Hülse.

Die ersten Haltearme können sich unter einem flachen Winkel zur Axialrichtung der Hülse erstrecken. Sie können dann zur Einrastung in der ersten Ringnut auf einfache Weise ohne radial nach innen ragende Vorsprünge für den Eingriff in die Ringnut ausgebildet sein.

Ferner ist es günstig, wenn die erste Halterippe als radial nach außen ragender Flansch an dem in die Hülse einzuführenden Ende der ersten Fluidleitung ausgebildet ist. Ein solcher Flansch ist unabhängig davon auf einfache Weise auszubilden, ob die erste Fluidleitung aus Metall oder Kunststoff hergestellt ist.

Die zweite Halterippe kann durch eine Ausbauchung der zweiten Fluidleitung gebildet sein. Eine solche Ausbauchung ist ebenfalls leicht herstellbar, zum Beispiel durch axiale Stauchung der Fluidleitung, wenn sie aus Metall besteht.

Vorzugsweise besteht die zweite Fluidleitung aus Metall, wobei die Ringnuten in die Fluidleitung eingerollt sind. Das Einrollen ist auf einfache Weise rasch durchführbar und bewirkt eine geringere Schwächung des Fluidleitungsquerschnitts als eine spanabhebende Bearbeitung.

Die Erfindung und ihre Weiterbildungen werden nachstehend anhand der beigefügten Zeichnung eines Ausführungsbeispiels näher beschrieben. Es zeigen:
- Fig. 1: eine perspektivische Darstellung einer erfindungsgemäßen zusammengesteckten Steckverbindung in axial aufgeschnittener Form,
- Fig. 2: einen Axialschnitt durch die erfindungsgemäße Steckverbindung ohne den in Fig. 1 dargestellten Indikator für den Kupplungszustand,
- Fig. 3: eine Explosionsdarstellung der Einzelteile der Steckverbindung nach Fig. 1,

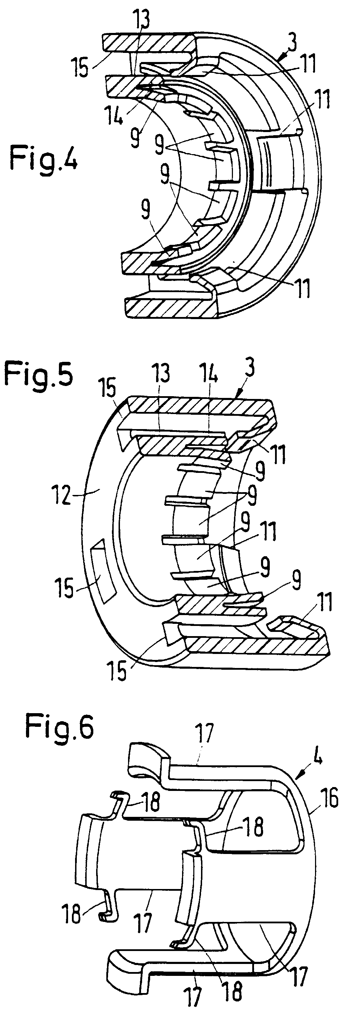

- Fig. 4: eine perspektivische Axialschnittansicht einer Hülse der erfindungsgemäßen Steckverbindung, schräg von ihrem einen Ende her gesehen,
- Fig. 5: eine perspektivische Axialschnittansicht der Hülse nach Fig. 4, schräg vom anderen Ende her gesehen, und
- Fig. 6: eine perspektivische Darstellung eines Indikators für den Kupplungszustand der erfindungsgemäßen Steckverbindung.

Die dargestellte Steckverbindung besteht aus einer ersten Fluidleitung 1, einer zweiten Fluidleitung 2, einer Hülse 3, einem Indikator 4 für den Kupplungszustand der Steckverbindung und einer Dichtungseinrichtung, bestehend aus zwei Dichtringen 5, sogenannten O-Ringen. Während die Fluidleitungen 1, 2 vorzugsweise aus Metall bestehen, aber auch aus Kunststoff bestehen können, bestehen die Hülse 3 und der Indikator 4 aus Kunststoff.

Die Dichtringe 5 sind in Ringnuten 6 der zweiten Fluidleitung 2 angeordnet.

Die erste Fluidleitung 1 hat an ihrem kupplungsseitigen freien Ende eine radial nach außen vorstehende Halterippe 7 in Form eines radial nach außen gebogenen Flansches.

Die zweite Fluidleitung 2 hat eine zweite Halterippe 8 in Form eines radial nach außen vorstehenden, durch Stauchen der Fluidleitung 2 ausgebildeten Flansches, der einen axialen Abstand von dem im eingekuppelten Zustand innerhalb der ersten Fluidleitung 1 liegenden freien Ende der zweiten Fluidleitung 2 aufweist.

Innerhalb der Hülse 3 sind einstückig mit der Hülse 3 ausgebildete, elastisch biegsame Haltearme 9 vorgesehen, die sich in axialer Richtung unter einem flachen Winkel zur Axialrichtung der Hülse 3 radial nach innen erstrecken und in eine Ringnut 10 der zweiten Fluidleitung 2 einrastbar sind. Mit der Innenseite der Hülse 3, an ihrem der Halterippe 8 abgekehrten Ende, sind ferner schräg nach innen ragende, elastisch biegsame Haltearme 11 einstückig verbunden. Diese Haltearme gleiten bei Einführung der Fluidleitung 1 in die Hülse 3 über die Halterippe 7 hinweg und rasten hinter der Halterippe 7 ein.

Die Hülse 3 hat an ihrem im verbundenen Zustand an der zweiten Halterippe 8 anliegenden Ende eine radial nach innen verlaufende, einstückig mit der Hülse ausgebildete Stirnwand 12. Mit der Stirnwand 12 ist eine sich axial ins Innere der Hülse 3 in einem radialen Abstand von ihrer Innenseite erstreckende zylindrische Wand 13 einstückig verbunden. Die Wand 13 überdeckt mit zumindest einem Teil 14 ihrer Länge die Haltearme 9 in einem radialen Abstand, um die Haltearme 9 vor Verschmutzung zu schützen. Die Stirnwand 12 hat mit den Haltearmen 11 fluchtende Durchbrüche 15, die die Herstellung der Hülse 3 erleichtern. Bei der Herstellung werden die Durchbrüche 15 durch Kernteile eines Formwerkzeugs geformt, die zugleich auch die radial äußere Fläche der Haltearme 11 formen. Nach der Aushärtung des Kunststoffes im Formwerkzeug können die Kernteile durch die Durchbrüche 15 hindurch herausgezogen werden.

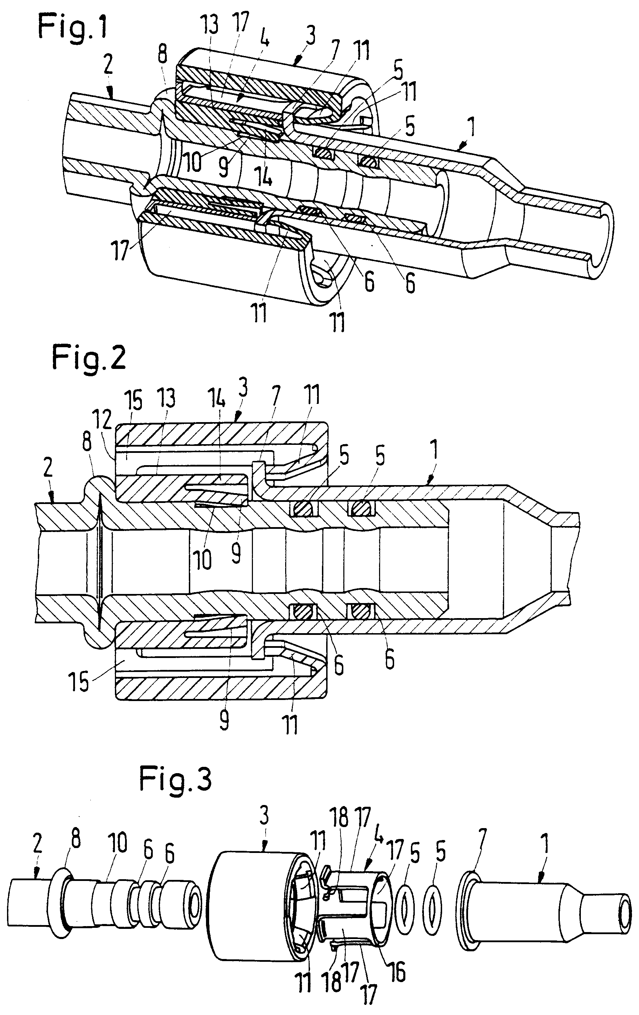

Der Indikator 4 hat von einem Ring 16 axial abstehende Beine 17, deren freie Enden radial nach außen gerichtet sind. Die Beine 17 erstrecken sich in der Einbaulage des Indikators nach Fig. 1 zwischen der Hülse 3 und der sich in diese erstreckenden zylindrischen Wand 13. An wenigstens zwei Beinen 17 des Rings 16, die sich diametral gegenüberliegen, stehen zwei zum freien Ende der Beine 17 hin abgewinkelte Federarme 18 seitlich ab. Beim Einführen der Fluidleitung 1 in die Hülse 3 drückt ihre Halterippe 7 gegen den Ring 16 und damit die freien Enden der Beine 17 gegen die Federkraft der Federarme 18 in die Durchbrüche 15. Denn die Federarme 18 legen sich unter elastischer Verbiegung beim Einführen der Fluidleitung 1 in die Hülse 3 an der Innenseite der Stirnwand 12 an. Nach der Ausführung der Steckverbindung sind die freien Enden der Beine 17 des Indikators 4 in den Durchbrüchen 15 der Stirnwand 12 gut sichtbar, wobei sie entweder mit der axial äußeren Seite der Stirnwand 12 fluchten oder über diese hinausragen. Dies ermöglicht die visuelle Feststellung, daß die Haltearme 11 hinter der Halterippe 7 eingerastet sind und die Steckverbindung fehlerfrei ist. Nach dem Entkuppeln, wobei zunächst die Haltearme 11 mittels eines Werkzeugs radial nach außen über den Umfang der Halterippe 7 hinaus aufgespreizt werden und dann die Fluidleitung 1 aus der Hülse 3 herausgezogen wird, drücken die Federarme 18 den Indikator 4 axial ins Innere der Hülse 3 zurück, so daß die freien Enden der Beine 17 weniger weit in die Durchbrüche 15 ragen und der Ring 16 an den freien Enden der wieder radial nach innen in die Lage nach den Fig. 1 und 2 zurückfedernden Haltearme 11 anliegt.

Die Halterippe 8 ist durch eine Ausbauchung der zweiten Fluidleitung 2 gebildet, was dadurch bewirkt wird, daß die Fluidleitung 2 an der Stelle der Halterippe 8 radial nach außen gedrückt und gleichzeitig in Axialrichtung gestaucht wird.

Die Ringnuten 6, 10 sind in die Fluidleitung 2 eingerollt, wobei das Material der Fluidleitung 2 im Bereich der Ringnuten 6, 10 durch den Druck des Rollwerkzeugs geringfügig radial nach innen gedrückt wird. Die Fluidleitung 2 wird daher im Bereich der Ringnuten 6, 10 weniger als bei Ausbildung der Ringnuten durch spanabhebende Formgebung geschwächt.

Die Steckverbindung wird gemäß Fig. 3 in der Weise ausgeführt, daß zunächst die Hülse 3 bis zur Anlage ihrer Stirnwand 12 an der Halterippe 8 über den die Ringnuten 6, 10 aufweisenden freien Endabschnitt der Fluidleitung 12 aufgeschoben wird, wobei ihre radial inneren, an der zylindrisch Wand 13 angeformten Haltearme 9 in die Ringnut 10 einrasten.

Dann werden die Dichtringe 5 auf den Endabschnitt der Hülse 3 bis in die Ringnuten 6 aufgeschoben. Anschließend oder zuvor wird der Indikator 4 in den Zwischenraum zwischen der Außenwand der Hülse 3 und der Wand 13 eingeführt, wobei die Haltearme 11 über den Ring 16 hinweggleiten. Dann wird die Fluidleitung 1 auf den freien Endabschnitt der Fluidleitung 2 bis zur Anlage ihrer Halterippe 7 am inneren Ende der Wand 13 und am Ring 16 in die Hülse 3 eingeführt, wobei die Haltearme 11 über die Rippe 7 hinweggleiten und hinter der Rippe 7 einrasten. An der Lage der freien Enden der Beine 17 des Indikators 4 kann dann visuell leicht überprüft werden, ob die Steckverbindung fehlerfrei ist.

Die Fluidleitung 1 kann beliebig lang ausgebildet sein. Es ist aber auch möglich, auf ihrem in den Fig. 1 bis 3 rechten Ende einen Schlauch festzuklemmen, wozu dann dieses Ende mit Halterippe versehen sein kann. Es ist aber auch möglich, den Schlauch an diesem Ende auf andere Weise zu befestigen.

Die Fluidleitung 12 kann ebenfalls nach links in den Fig. 1 bis 3 beliebig lang ausgebildet, mehrfach abgewinkelt oder ein kurzer Stutzen sein, der mit einem Gerät einstückig verbunden ist, oder mit einem Schlauch verbunden sein.

## Patentansprüche

1. Steckverbindung zweier Fluidleitungen (1, 2), von denen die erste Fluidleitung (1) eine erste Halterippe (7) und die zweite Fluidleitung (2) eine zweite Halterippe (8) aufweist, mit einer Hülse (3), innerhalb der sich einstückig mit der Hülse (3) ausgebildete, elastisch biegsame erste Haltearme (9) in axialer Richtung erstrecken und in eine erste Ringnut (10) der zweiten Fluidleitung (2) einrastbar sind, mit elastisch biegsamen, mit der Hülse (3) verbundenen Haltern, die bei Einführung der ersten Fluidleitung (1) in die Hülse (3) über die erste Halterippe (7) hinweggleiten und hinter der ersten Halterippe (7) einrasten, und mit einer Dichtungseinrichtung (5), die in wenigstens einer zweiten Ringnut (6) der zweiten Fluidleitung (2) zwischen dem in die erste Fluidleitung (1) einzuführenden freien Ende der zweiten Fluidleitung (2) und der zweiten Halterippe (8) angeordnet ist, dadurch gekennzeichnet, daß die Halter als einstückig mit der Innenseite der Hülse (3) verbundene, schräg nach innen ragende zweite Haltearme (11) ausgebildet sind und die erste Ringnut (10) zwischen der zweiten Halterippe (8) und der zweiten Ringnut (6) ausgebildet ist.

2. Steckverbindung nach Anspruch 1, dadurch gekennzeichnet, daß, die Hülse (3) an ihrem im verbundenen Zustand an der zweiten Halterippe (8) anliegenden Ende eine radial nach innen verlaufende, einstückig mit der Hülse ausgebildete Stirnwand (12) aufweist, mit der eine sich axial ins Innere der Hülse (3) in einem radialen Abstand von der Innenseite der Hülse (3) erstreckende zylindrische Wand (13) einstückig verbunden ist, die mit zumindest einem Teil (14) ihrer Länge die ersten Haltearme (9) in einem radialen Abstand axial überdeckt.

3. Steckverbindung nach Anspruch 2, dadurch gekennzeichnet, daß die Hülse (3) aus Kunststoff besteht und die Stirnwand (12) mit den zweiten Haltearmen (11) fluchtende Durchbrüche (15) aufweist.

4. Steckverbindung nach Anspruch 3, dadurch gekennzeichnet, daß sich zwischen der Hülse (3) und der sich in diese erstreckenden zylindrischen Wand (13) von einem Ring (16) axial abstehende Beine (17) erstrecken, deren freie Enden gegen Federkraft durch einen gegen den Ring (16) drückenden Teil (7) der in die Hülse (3) eingeführten ersten Fluidleitung (1) in die Durchbrüche (15) gedrückt sind.

5. Steckverbindung nach Anspruch 4, dadurch gekennzeichnet, daß an wenigstens zwei Beinen (17) des Rings (16), die sich gegenüberliegen, zwei Federarme (18) seitlich abstehen, die sich unter elastischer Verbiegung beim Einführen der ersten Fluidleitung (1) in die Hülse (3) an der Innenseite der Stirnwand (12) anlegen.

6. Steckverbindung nach einem der Ansprüche 1 bis 5, dadurch gekennzeichnet, daß die zweiten Haltearme (11) einstückig mit dem der zweiten Halterippe (8) abgekehrten Ende der Hülse (3) verbunden sind.

7. Steckverbindung nach einem der Ansprüche 1 bis 6, dadurch gekennzeichnet, daß sich die ersten Haltearme (9) unter einem flachen Winkel zur Axialrichtung der Hülse (3) erstrecken.

8. Steckverbindung nach einem der Ansprüche 1 bis 7, dadurch gekennzeichnet, daß die erste Halterippe (7) als radial nach außen ragender Flansch an dem in die Hülse (3) einzuführenden Ende der ersten Fluidleitung (1) ausgebildet ist.

9. Steckverbindung nach einem der Ansprüche 1 bis 8, dadurch gekennzeichnet, daß die zweite Halterippe (8) durch eine Ausbauchung der zweiten Fluidleitung (2) gebildet ist.

10. Steckverbindung nach einem der Ansprüche 1 bis 9, dadurch gekennzeichnet, daß die zweite Fluidleitung (2) aus Metall besteht und die Ringnuten (6, 10) in die Fluidleitung (2) eingerollt sind.
